# FASCICULE DE BREVET EUROPEEN

(11) **EP 3 554 814 B1**
(45) Date de publication et mention de la délivrance du brevet: **04.11.2020**
(21) Numéro de dépôt: 17817815.8
(22) Date de dépôt: 08.12.2017
(51) Int. Cl.: B29D 30/06

(54) **MOULE POUR LA VULCANISATION D'UN PNEUMATIQUE**
FORM ZUR VULKANISIERUNG EINES REIFENS
MOLD FOR VULCANIZING A TIRE

(30) Priorité: 16.12.2016 FR 1662628
(43) Date de publication de la demande: 23.10.2019
(73) Titulaire: Compagnie Générale des Etablissements Michelin, 63000 Clermont-Ferrand (FR)
(72) Inventeur: VILLENEUVE, Bernard, 63040 Clermont-Ferrand Cedex 9 (FR); DEAN, David, 63040 Clermont-Ferrand Cedex 9 (FR)
(74) Mandataire: Roussy, Delphine
(86) Numéro de dépôt international: PCT/FR2017/053461
(87) Numéro de publication internationale: WO 2018/109331

(56) Documents cités:
- EP-A1- 3 103 609
- JP-A- 2005 144 901
- US-A- 3 204 681
- US-A- 4 624 899
- US-A1- 2002 185 204
- US-A1- 2016 221 285

## Description

### DOMAINE DE L'INVENTION

La présente invention concerne un moule pour le moulage et la vulcanisation d'un pneumatique. Plus particulièrement, le moule comprend une partie en creux pour le moulage d'une paroi de gomme destinée à s'étendre à partir du flanc du pneumatique, à proximité du talon d'accrochage de la jante.

### ETAT DE LA TECHNIQUE

Des moules pour le moulage et la vulcanisation d'un pneumatique sont connus par exemple des documents JP 2005 144 901 A, US 2016/221285 A, et EP 3 103 609 A.

Il est connu du document US 2002/0185204 un pneumatique pour véhicule automobile comportant une protubérance sur un flanc. Cette protubérance, également appelée protecteur de talon, est disposée sur le pneu à proximité du talon d'accrochage pour la fixation du pneumatique sur une jante d'un véhicule automobile. La protubérance permet une protection de ce talon contre des agressions mécaniques, telles que des chocs avec les trottoirs.

Afin de mouler ce protecteur de talon sur un pneumatique, ce pneumatique est reçu dans un moule dans un espace de réception de pneumatique adapté. Le protecteur de talon est moulé par une cavité du moule, globalement trapézoïdale, prolongeant l'espace de réception de pneumatique. En vue d'avoir un protecteur de talon assez rigide, la cavité fait un angle supérieur à 45° avec une direction radiale du moule et la largeur de cette cavité diminue plus celle-ci s'éloigne de l'espace de réception du pneumatique.

Or, il a été constaté que l'écoulement de l'air, au cours d'un roulage, est perturbé à proximité du talon d'accrochage de la jante. Ces perturbations augmentent la résistance au roulement du pneumatique et la consommation du véhicule automobile est en conséquence accrue. L'écoulement de l'air est d'autant plus perturbé que le pneumatique comporte un protecteur de talon.

Il existe donc un besoin de proposer un moule simple et économique, adapté au moulage d'une solution permettant d'améliorer l'écoulement de l'air sur le flanc d'un pneumatique.

### DEFINITIONS

Par « pneumatique », on entend tous les types de bandages élastiques soumis à une pression interne ou non.
Par « gomme » dans un pneumatique, on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).
Par « angle » fait par une fente d'un moule, respectivement une paroi de gomme d'un pneumatique, avec une direction donnée, on entend l'angle mesuré entre la direction principale de cette fente, respectivement la paroi de gomme, et cette direction donnée (dans une vue en coupe). Cet angle est mesuré en partant de la fente, respectivement de la paroi de gomme, vers la direction donnée, selon le sens des aiguilles d'une montre.
Par « direction principale » de la fente dans une vue en coupe, on entend la direction dans laquelle la fente présente une plus grande dimension dans cette vue en coupe.
Par « direction radiale » dans un moule, on entend une direction passant par le centre du moule et orientée vers la partie de moule adaptée pour mouler la bande de roulement du pneumatique.
Par « direction radiale » dans un pneumatique, on entend une direction passant par le centre du pneumatique et orientée vers la bande de roulement de ce pneumatique.
Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.
Par « flanc » d'un pneumatique, on entend une surface latérale dudit pneumatique disposée entre la bande de roulement et un talon d'accrochage de la jante.
Par « talon d'accrochage de la jante », on entend la partie du pneumatique adaptée pour venir lier le pneumatique à la jante d'une roue d'un véhicule automobile. Le talon d'accrochage de la jante forme une excroissance ou bourrelet à l'extrémité du flanc du pneumatique. Ce talon d'accrochage de la jante comprend une tringle métallique s'étendant circonférentiellement dans le pneumatique.

### RESUME DE L'INVENTION

L'invention concerne un moule pour la vulcanisation d'un pneumatique selon la revendication 1, ledit pneumatique comprenant un flanc et un talon d'accrochage prolongeant ledit flanc et adapté pour être accroché à une jante d'une roue d'un véhicule automobile. Le moule comporte une partie latérale adaptée pour mouler le flanc du pneumatique et une partie inférieure adaptée pour mouler le talon d'accrochage. La partie latérale et la partie inférieure délimite au moins partiellement un espace de réception de pneumatique adapté pour la réception du pneumatique à vulcaniser dans le moule. Le moule comprend une fente prolongeant l'espace de réception de pneumatique et la fente est moulée au moins partiellement par la partie inférieure du moule.

Pour améliorer l'écoulement de l'air à proximité du talon d'accrochage du pneumatique, il est prévu de pourvoir le flanc du pneumatique avec une paroi de gomme de faible épaisseur. Cette paroi de gomme s'étend le long de la circonférence de ce flanc. Elle est, en outre, venue de matière avec ledit flanc et elle recouvre, en totalité ou en partie, le talon d'accrochage de la jante. La paroi de gomme est moulée dans le moule par l'intermédiaire d'une fente. Vu de l'extérieur du pneumatique, la paroi de gomme agit comme une barrière, limitant l'écoulement de l'air à proximité du talon d'accrochage de la jante. L'air s'écoule ainsi principalement le long de la paroi de gomme sur une face externe de cette paroi de gomme. Les perturbations dans l'écoulement de l'air sont alors moins importantes et la consommation du véhicule est améliorée.

Selon l'invention, la fente, vue en coupe, fait un angle inférieur ou égal à 30°, en valeur absolue, avec une direction radiale du moule.

Dans un autre mode de réalisation non limitatif, l'angle est inférieur ou égal à 15°.

Dans un autre mode de réalisation non limitatif, la fente s'étend parallèlement à la direction radiale.

Dans un autre mode de réalisation non limitatif, la longueur de la fente est supérieure ou égale à cinq fois la largeur de ladite fente.

Dans un autre mode de réalisation non limitatif, la largeur de la fente est inférieure ou égale à 10 mm, et de préférence inférieure ou égale à 2 mm.

Dans un autre mode de réalisation non limitatif, l'espace de réception de pneumatique comprend une partie de jonction entre la fente et le reste de l'espace de réception, la largeur de ladite partie de jonction se réduisant progressivement de l'espace de réception vers la fente.

Dans un autre mode de réalisation non limitatif, la fente est délimitée par deux parties de moule différentes.

Dans un autre mode de réalisation non limitatif, la fente est recouverte par un revêtement anti-collant.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** présente schématiquement une vue en coupe du moule de l'invention selon un premier mode de réalisation non limitatif, dans lequel la fente qui prolonge l'espace de réception du pneumatique dans le moule est oblique par rapport à la direction circonférentielle Z ;
- la **figure 2** est une vue agrandie du moule de la **figure 1** centrée sur ladite fente ;
- la **figure 3** représente schématiquement une vue en coupe du moule de l'invention selon un second mode de réalisation non limitatif, dans lequel la fente a une direction principale orientée selon une direction radiale dans le moule ;
- la **figure 4** est une vue agrandie du moule de la **figure 3** centrée sur la fente ;
- la **figure 5** représente schématiquement une vue en coupe du moule de l'invention selon un troisième mode de réalisation non limitatif, dans lequel la fente est délimitée par deux parties de moule différentes ;
- la **figure 6** représente schématiquement une vue en coupe du moule de l'invention selon un sixième mode de réalisation non limitatif, dans lequel le moule comprend une zone de jonction entre la fente et l'espace de réception du pneumatique ;
- la **figure 7** représente partiellement un pneumatique comprenant une paroi de gomme moulée par un moule selon l'invention.

Dans la description qui va suivre, des éléments sensiblement identiques ou similaires seront désignés par des références identiques.

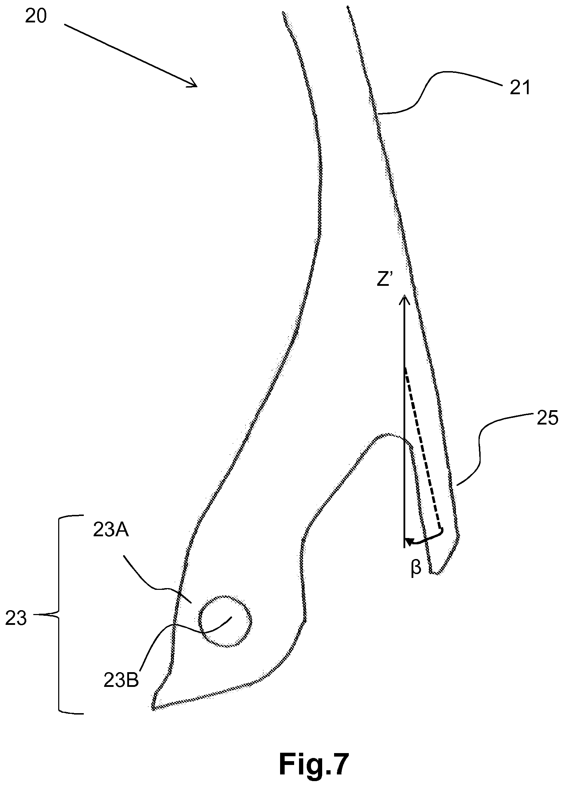

La **figure 7** représente partiellement un pneumatique 20 moulé à partir d'un moule objet de l'invention. Ce pneumatique 20 comprend une bande de roulement (non illustrée sur la figure 7), un flanc 21 et un talon d'accrochage 23. La bande de roulement est destinée à entrer en contact avec une chaussée lors du roulage du pneumatique 20. La bande de roulement est prolongée latéralement par le flanc 21. Ce flanc 21 se présente comme une surface latérale disposée entre la bande de roulement et le talon d'accrochage 23. Le flanc 21 comporte des marquages (non représentés) destinés à donner des informations techniques et légales sur la qualité du pneumatique et/ou à permettre au consommateur de distinguer la marque et l'origine du produit. Le talon d'accrochage 23 comprend un bourrelet de gomme 23A et une tringle métallique 23B. Le bourrelet de gomme 23A et la tringle métallique 23B favorisent l'accrochage du pneumatique sur une jante (non représentée) d'une roue d'un véhicule automobile.

Le pneumatique de la **figure 7** comporte également une paroi de gomme 25. La paroi de gomme 25 est de même composition que le flanc 21. Dans une variante de réalisation non limitative, la paroi de gomme 25 est composée d'un matériau différent de celui du flanc 21.

Vu en coupe, la paroi de gomme 25 débute à partir du flanc 21 et elle s'étend en direction du talon d'accrochage 23 en formant un angle béta β avec une direction radiale Z' du pneumatique. Cet angle β est inférieur à 30° avec la direction radiale Z'.

La paroi de gomme 25 s'étend circonférentiellement le long du flanc 21 du pneumatique 20 de sorte à former une barrière pour dévier le flux d'air et empêcher que ce flux d'air n'atteigne le talon d'accrochage 23. On diminue alors la résistance au roulement du pneumatique 20 au cours d'un roulage de ce pneumatique.

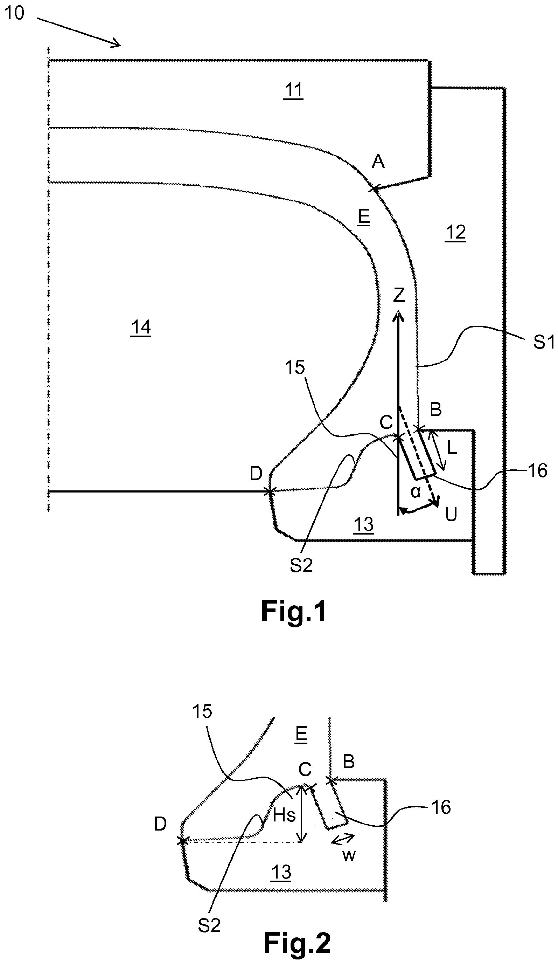

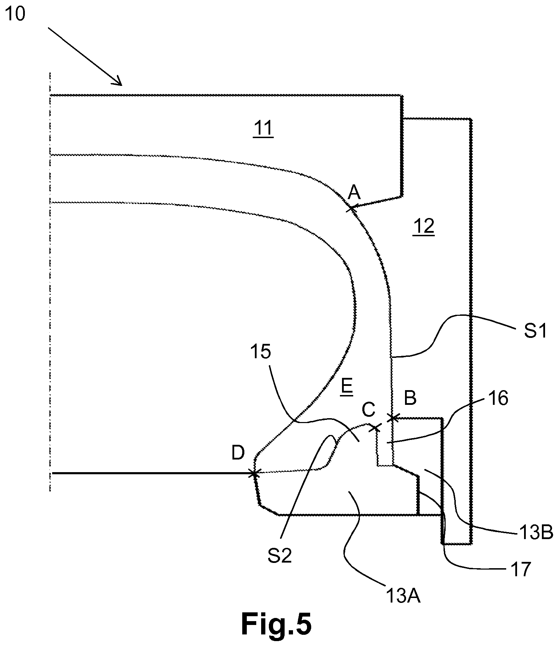

Les **figures 1** à **6** représentent schématiquement un moule 10 adapté pour mouler une paroi de gomme sur une pneumatique.

Le moule comprend plusieurs parties 11, 12, 13. Ces parties sont adaptées pour se déplacer les unes par rapport aux autres entre une position d'ouverture du moule et une position de fermeture dudit moule. Dans la position d'ouverture du moule, il est possible de venir placer le pneumatique à vulcaniser (dit pneumatique cru) dans le moule ou il est possible de venir enlever le pneumatique vulcanisé (dit pneumatique cuit) hors du moule. Dans la position de fermeture du moule, le pneumatique est enfermé dans le moule pour y être vulcanisé.

Le moule 10 comprend ainsi :
- une partie supérieure 11 adaptée pour mouler la bande de roulement d'un pneumatique ;
- une partie latérale 12 adaptée pour mouler un flanc du pneumatique ;
- une partie inférieure 13 adaptée pour mouler un bourrelet du pneumatique ;
- une fente 16.

### Partie supérieure 11 :

La partie supérieure 11 du moule est adaptée pour réaliser le moulage de la bande de roulement du pneumatique 20. La partie supérieure 11 du moule comprend ainsi le négatif de la sculpture présente sur la bande de roulement du pneumatique 20. Plus précisément, la partie supérieure 11 du moule comprend un ensemble de protubérances et de creux qui sont adaptés pour mouler des découpures (rainures et/ou incisions) sur la bande de roulement du pneumatique 20.

Dans un mode de réalisation préférentiel non représenté, la partie supérieure 11 du moule comprend plusieurs parties. La cinématique de ces différentes parties est déterminée de sorte que lorsque le moule est amené vers sa position d'ouverture, les différentes parties s'éloignent entre elles. Inversement, lorsque le moule est amené vers sa position de fermeture, les différentes parties se rapprochent entre elles.

### Partie latérale 12 :

La partie latérale 12 du moule est adaptée pour mouler le flanc 21 du pneumatique. Plus particulièrement, la partie latérale 12 du moule comprend une première surface S1 de moulage S1. Cette première surface S1 de moulage s'étend entre les points A et B visibles aux figures 1 à 6. Le point A correspond à une intersection entre la partie latérale 12 du moule et la partie supérieure 11 du moule. Le point B correspond à une intersection entre la partie latérale 12 du moule et la partie inférieure 13 dudit moule. La première surface de moulage S1 est adaptée pour mouler la surface externe du flanc 21 du pneumatique 20. Elle s'étend entre les points A et B visibles aux figures 1 à 6. Cette première surface de moulage S1 comprend un négatif des marquages présents sur le flanc 21 du pneumatique. Plus précisément, la première surface de moulage S1 comprend un ensemble de creux et de bosses adapté pour mouler lesdits marquages sur la surface externe du flanc 21 du pneumatique. Dans un mode de réalisation préférentiel, cet ensemble de creux et de bosses est porté par un insert monté solidaire dans la partie latérale 12 du moule.

Dans un mode de réalisation préférentiel, le moule comprend deux parties latérales de moule. Chacune de ces parties latérales de moule est destinée à mouler respectivement un flanc du pneumatique. La cinématique de ces deux parties latérales de moule est déterminée de sorte que lorsque le moule est amené vers sa position d'ouverture, les deux parties latérales du moule s'éloignent. Inversement, lorsque le moule est amené vers sa position de fermeture, les deux parties latérales du moule se rapprochent entre elles.

### Partie inférieure 13 :

La partie inférieure 13 du moule est une partie du moule adaptée pour mouler spécifiquement le talon d'accrochage 23 du pneumatique 20. Cette partie inférieure 13 du moule est portée par la partie latérale 12 de moule. Elle suit alors la même cinématique que cette partie latérale 12 de moule. La partie inférieure 13 comprend une seconde surface de moulage S2, un doigt de moulage 15 et une fente 16.

La seconde surface S2 de moulage est adaptée pour mouler une surface externe du talon d'accrochage 23 du pneumatique 20. La seconde de surface S2 de moulage S2 s'étend entre les points C et D visibles aux figures 1 à 6. Cette surface S2 est portée par un doigt de moulage 15. Ce doigt de moulage 15 délimite en partie une fente 16. Cette fente 16 est ouverte sur l'intérieur du moule 11. Elle prolonge notamment un espace de réception E de pneumatique adapté pour la réception d'un pneumatique à vulcaniser dans le moule 10. La fente est apte à mouler une paroi de gomme 25 d'un pneumatique 20.

### Membrane interne :

Le moule 10 comprend une membrane interne 14. Cette membrane interne 14 est adaptée pour prendre une position d'expansion et une position de repos. Dans la position d'expansion, la membrane interne 14 occupe un volume maximal dans le moule. Dans cette position d'expansion, la membrane interne 14 définit, avec la première surface de moulage S1 de la partie latérale 12 du moule et avec la seconde surface de moulage S2 de la partie inférieure 13 du moule, un espace de réception E de pneumatique. Cet espace de réception E est adapté pour la réception d'un pneumatique à vulcaniser dans le moule 10. Plus particulièrement, dans la position d'expansion de la membrane interne 14, ladite membrane interne 14 vient pousser le pneumatique cru contre la partie supérieure 11 du moule, contre la partie latérale 12 du moule et contre la partie inférieure 13 du moule. La sculpture sur la bande de roulement du pneumatique 20 est alors moulée par la partie supérieure 11. De la même manière, les marquages sur le flanc 21 du pneumatique sont moulés par la partie latérale 12 de moule. Le moulage des sculptures et des marquages est rendu possible par le chauffage du moule 10 à très haute température (de l'ordre de 150°C) pendant une dizaine de minutes. Dans un mode de réalisation préférentiel, le moule 10 est chauffé à l'eau surchauffée et à la vapeur. Sous l'effet de la chaleur, la gomme présente dans le pneumatique cru flue dans les interstices du moule 10. La fente 16 se remplit de matière pour former la paroi de gomme 25 sur le pneumatique cuit, cette fente 16 prolongeant l'espace de réception E de pneumatique dans le moule. Une fois l'opération de vulcanisation terminée, la membrane interne 14 se rétracte pour prendre sa position de repos de sorte à faciliter l'extraction du pneumatique cuit 20 hors du moule. Le passage de la position de repos à la position d'expansion de la membrane interne 14 est rendu possible par la circulation d'un fluide dans cette membrane interne 14.

### Fente :

Comme il a déjà été précisé, le moule 10 comprend une fente 16 adaptée pour mouler une paroi de gomme 25 d'un pneumatique 20. Cette fente 16 se présente comme un prolongement de l'espace de réception E du moule 10. Vu en coupe, la fente 16 est espace creux globalement rectangulaire. Elle s'étend du point B au point C et se prolonge circonférentiellement dans le moule 10.

Dans un mode de réalisation non limitatif, la fente 16 fait un angle a inférieur ou égal à 30° en valeur absolue, avec une direction radiale Z. Cette fente 16 présente une direction principale U dans sa longueur L et l'angle a est mesuré entre cette direction principale U et la direction radiale Z, dans le sens des aiguilles d'une montre. Avec un tel angle a, la paroi de gomme 25 moulée par la fente 16 fait un angle β limité sur le pneumatique 20. Ainsi au cours du roulage du pneumatique 20, le flux d'air agira sur la paroi de gomme 25 de sorte à rapprocher cette paroi de gomme 25 du talon d'accrochage 23. La protection du talon d'accrochage 23 par la paroi de gomme 25, c'est-à-dire le fait de limiter l'écoulement de l'air directement sur ce talon d'accrochage, est alors améliorée de manière dynamique au cours du roulage.

Dans une variante de réalisation non limitative, l'angle a de la fente 16 est inférieur ou égal à 15°. On améliore encore davantage le rapprochement de la paroi de gomme 25 vers le talon d'accrochage 23, au cours du roulage du pneumatique 20.

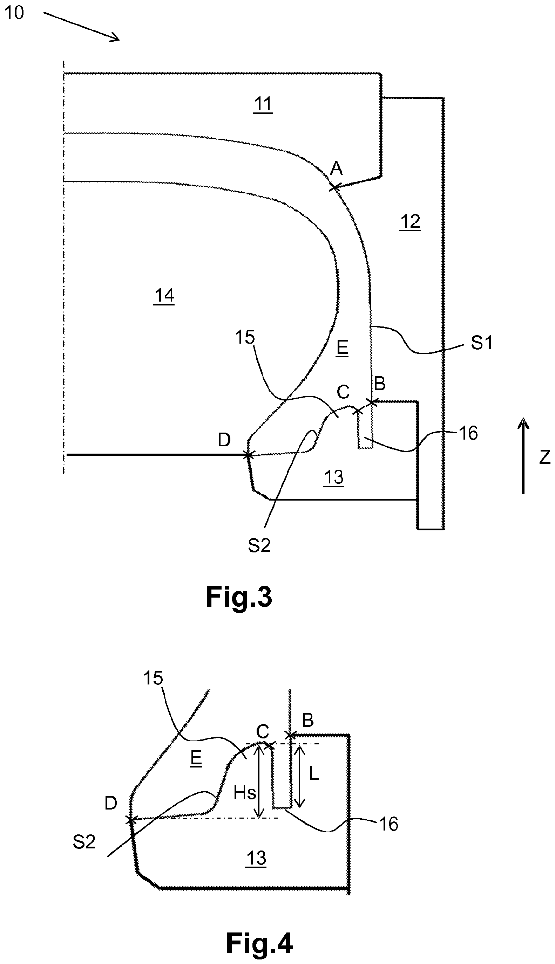

Dans une variante de réalisation non limitative illustrée à la figure 3, l'angle a de la fente 16 est nul et cette fente 16 s'étend parallèlement à la direction radiale Z.

Comme il a déjà été précisé, la fente 16 possède une longueur L. Cette longueur est mesurée de l'intersection de la fente 16 avec la surface de moulage S1 jusqu'à une extrémité de cette fente 16. La fente 16 possède également une largeur W, correspondant à la distance entre deux parois opposées de cette fente. La longueur L de la fente est déterminée de sorte que cette longueur est supérieure ou égale à cinq fois la largeur W. La paroi de gomme 25 moulée par la fente 16 respecte une proportionnalité identique entre sa longueur et sa largeur. De cette manière, la paroi de gomme 25 possède une plus grande flexibilité. Cette paroi de gomme 25 se rapproche ainsi plus facilement du talon d'accrochage sous l'action du flux d'air au cours du roulage du pneumatique.

Dans une variante de réalisation non limitative, la largeur W de la fente est inférieure ou égale à 10 mm. Préférentiellement, la largeur W de la fente est inférieure ou égale à 2 mm.

Comme il est illustré aux figures 1 à 6, la fente 16 délimite avec la seconde surface de moulage S2 un doigt de moulage 15. Ce doigt de moulage 15 est adapté à mouler sur le pneu une zone dépourvue de gomme située derrière la paroi de gomme 25. Cette zone dépourvue de gomme apporte de la flexibilité à ladite paroi de gomme 25. Le doigt de moulage 15 a une hauteur maximale HS, illustrée notamment à la figure 2 et à la figure 4. Cette hauteur maximale HS correspond à la distance entre le point C et le point D de la surface de moulage S2, distance mesurée selon la direction radiale Z. Le point C correspondent sensiblement au point le plus haut de la surface de moulage S2. Le point D correspond sensiblement au point le plus bas de ladite surface de moulage S2.

Dans un mode de réalisation non limitatif, la longueur de la fente 16 correspond à au moins 90% de la hauteur maximale HS du doigt de moulage 15. De cette manière le recouvrement du talon d'accrochage 23 par la paroi de gomme 25 est optimisé. Préférentiellement, la longueur de la fente 16 correspond à la hauteur maximale HS du doigt de moulage 15.

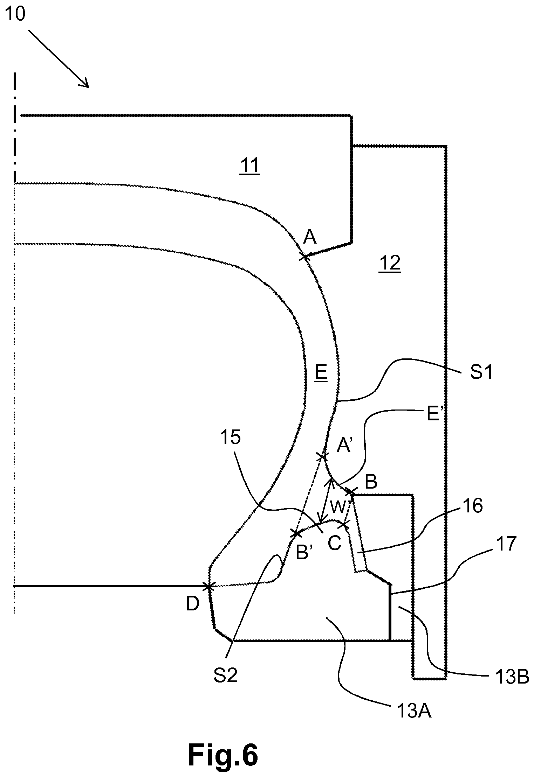

Dans un mode de réalisation non limitatif illustré à la figure 6, l'espace de réception E de pneumatique comprend une partie de jonction E'. Cette partie de jonction E' assure la jonction entre la fente 16 et le reste de l'espace de réception E de pneumatique. Elle est limitée par les points A'-B et B'-C. La partie de jonction E' a une largeur W' et cette largeur W' diminue progressivement de l'espace de réception E vers la fente 16. La partie de jonction E' favorise ainsi le déplacement de la gomme rendue plus fluide sous l'effet de la chaleur lors de la vulcanisation du pneumatique. On améliore alors le remplissage de la fente 16 par cette gomme et l'obtention sur le pneumatique 20 d'une paroi de gomme 25 conforme.

Dans un mode de réalisation non limitatif, la partie inférieure 13 du moule est en plusieurs parties. Dans un mode de réalisation illustré à la figure 6 et à la figure 7, la partie inférieure 13 du moule comprend ainsi une première partie 13A et une seconde partie 13B. Cette première partie 13A et cette seconde partie 13B délimitent la fente 16. La partie inférieure 13 comprend également une zone de transition 17 entre la première partie 13A et la seconde partie 13B. Cette zone de transition 17 débute à partir de la fente 16, à une extrémité C' de ladite fente 16. Cette extrémité C'est opposée à l'espace de réception E de moule. La zone de transition 17 débouche à l'extérieur du moule 10. La zone de transition 17 constitue alors un canal par laquelle une partie de l'air emprisonné dans l'espace de réception E de moule peut s'échapper lors de l'arrivée de la gomme dans la fente 16. On facile alors l'écoulement de la gomme vers l'extrémité de la fente 16 lors de la vulcanisation du pneumatique 20. La formation de la paroi de gomme 25 en est alors améliorée.

Dans un mode de réalisation non limitatif, la fente 16 est recouverte par un revêtement anti-collant, tel que du XYLAN®. Le revêtement anti-collant favorise le démoulage de la paroi de gomme 25 hors de la fente 16 une fois le pneumatique 20 vulcanisé.

L'invention n'est pas limitée aux exemples décrits et représentés et diverses modifications peuvent y être apportées sans sortir de son cadre.

## Revendications

1. Moule (10) pour la vulcanisation d'un pneumatique (20), ledit pneumatique (20) comprenant un flanc (21) et un talon d'accrochage (23) prolongeant ledit flanc (21) et adapté pour être accroché à une jante d'une roue d'un véhicule automobile, ledit moule (10) comportant une partie latérale (12) adaptée pour mouler le flanc (21) du pneumatique et une partie inférieure (13) adaptée pour mouler le talon d'accrochage (23), ladite partie latérale (12) et ladite partie inférieure (13) délimitant au moins partiellement un espace de réception (E) de pneumatique adapté pour la réception du pneumatique à vulcaniser dans le moule (10), **caractérisé en ce que** ledit moule comprend une fente (16) prolongeant l'espace de réception (E) de pneumatique, et faisant, vue en coupe, un angle (α) inférieur ou égal à 30°, en valeur absolue, avec une direction radiale (Z) du moule (10), et **en ce que** ladite fente (16) est moulée au moins partiellement par la partie inférieure (13) du moule (10).

2. Moule (10) selon la revendication 1, dans lequel l'angle (α) est inférieur ou égal à 15°.

3. Moule (10) selon l'une quelconque des revendications 1 à 2, dans lequel la fente (16) s'étend parallèlement à la direction radiale (Z).

4. Moule (10) selon l'une quelconque des revendications 1 à 3, dans lequel la longueur (L) de la fente (16) est supérieure ou égale à cinq fois la largeur (W) de ladite fente (16).

5. Moule (10) selon la revendication 4, dans lequel la largeur (W) de la fente (16) est inférieure ou égale à 10 mm, et de préférence inférieure ou égale à 2 mm.

6. Moule (10) selon l'une quelconque des revendications précédentes 1 à 5, dans lequel l'espace de réception (E) de pneumatique comprend une partie de jonction (E') entre la fente (16) et le reste de l'espace de réception (E), la largeur (W') de ladite partie de jonction (E') se réduisant progressivement de l'espace de réception (E) vers la fente (16).

7. Moule (10) selon l'une quelconque des revendications précédentes 1 à 6, dans lequel la fente (16) est délimitée par deux parties de moule différentes (13A, 13B).

8. Moule (10) selon l'une quelconque des revendications précédentes 1 à 7, dans lequel la fente (16) est recouverte par un revêtement anti-collant.

## Patentansprüche

1. Form (10) für die Vulkanisierung eines Luftreifens (20), wobei der Luftreifen (20) eine Seitenfläche (21) und einen Verankerungswulst (23), der die Seitenfläche (21) verlängert und dafür ausgelegt ist, an einer Felge eines Rades eines Kraftfahrzeugs verankert zu werden, umfasst, wobei die Form (10) einen seitlichen Abschnitt (12), der dafür ausgelegt ist, die Seitenfläche (21) des Luftreifens zu formen, und einen unteren Abschnitt (13), der dafür ausgelegt ist, den Verankerungswulst (23) zu formen, umfasst, wobei der seitliche Abschnitt (12) und der untere Abschnitt (13) einen Raum (E) für die Aufnahme des Luftreifens, der dafür ausgelegt ist, den zu vulkanisierenden Luftreifen in der Form (10) aufzunehmen, wenigstens teilweise begrenzen, **dadurch gekennzeichnet, dass** die Form einen Schlitz (16) aufweist, der den Raum (E) für die Aufnahme des Luftreifens verlängert und bei Betrachtung im Schnitt mit einer radialen Richtung (Z) der Form (10) einen Winkel (α) bildet, der dem Absolutwert nach kleiner oder gleich 30° ist, und dass der Schlitz (16) wenigstens teilweise durch den unteren Abschnitt (13) der Form (10) geformt wird.

2. Form (10) nach Anspruch 1, wobei der Winkel (α) kleiner oder gleich 15° ist.

3. Form (10) nach einem der Ansprüche 1 bis 2, wobei sich der Schlitz (16) parallel zu der radialen Richtung (Z) erstreckt.

4. Form (10) nach einem der Ansprüche 1 bis 3, wobei die Länge (L) des Schlitzes (16) größer oder gleich der fünffachen Breite (W) des Schlitzes (16) ist.

5. Form (10) nach Anspruch 4, wobei die Breite (W) des Schlitzes (16) kleiner oder gleich 10 mm und vorzugsweise kleiner oder gleich 2 mm ist.

6. Form (10) nach einem der vorhergehenden Ansprüche 1 bis 5, wobei der Aufnahmeraum (E) des Luftreifens einen Verbindungsabschnitt (E') zwischen dem Schlitz (16) und dem verbleibenden Aufnahmeraum (E) aufweist, wobei die Breite (W') des Verbindungsabschnitts (E') von dem Aufnahmeraum (E) zu dem Schlitz (16) allmählich abnimmt.

7. Form (10) nach einem der vorhergehenden Ansprüche 1 bis 6, wobei der Schlitz (16) durch zwei verschiedene Formabschnitte (13A, 13B) begrenzt ist.

8. Form (10) nach einem der vorhergehenden Ansprüche 1 bis 7, wobei der Schlitz (16) durch einen nicht klebenden Überzug überzogen ist.

## Claims

1. Mould (10) for vulcanizing a tyre (20), the said tyre (20) comprising a sidewall (21) and an attachment bead (23) extending the said sidewall (21) and designed to be attached to a rim of a wheel of a motor vehicle, the said mould (10) comprising a lateral part (12) designed to mould the sidewall (21) of the tyre and a lower part 13 designed to mould the attachment bead (23), the said lateral part 12 and the said lower part 13 at least partially delimiting a tyre receiving space (E) designed to receive the tyre that is to be vulcanized in the mould (10), **characterized in that** the said mould comprises a slot (16) extending the tyre receiving space (E), and making, viewed in cross section, an angle (α) less than or equal to 30°, in terms of absolute value, with a radial direction (Z) of the mould (10), and **in that** the said slot (16) is at least partially moulded by the lower part 13 of the mould (10). and **in that**

2. Mould (10) according to Claim 1, in which the angle (α) is less than or equal to 15°.

3. Mould (10) according to any one of Claims 1 to 2, in which the slot (16) extends parallel to the radial direction (Z).

4. Mould (10) according to any one of Claims 1 to 3, in which the length (L) of the slot (16) is greater than or equal to 5 times the width (W) of the said slot (16).

5. Mould (5) according to Claim 4, in which the width (W) of the slot (16) is less than or equal to 10 mm, and preferably less than or equal to 2 mm.

6. Mould (10) according to any one of the preceding Claims 1 to 5, in which the tyre receiving space (E) comprises a junction part (E') joining the slot (16) with the rest of the receiving space (E), the width (W') of the said junction part (E') reducing progressively from the receiving space (E) towards the slot (16).

7. Mould (10) according to any one of the preceding Claims 1 to 6, in which the slot (16) is delimited by two different mould parts (13A, 13B).

8. Mould (10) according to any one of the preceding Claims 1 to 7, in which the slot (16) is covered with a non-stick coating.
